# EUROPÄISCHE PATENTSCHRIFT

(11) **EP 3 056 262 B1**
(45) Veröffentlichungstag und Bekanntmachung des Hinweises auf die Patenterteilung: **02.05.2018**
(21) Anmeldenummer: 15154776.7
(22) Anmeldetag: 12.02.2015
(51) Int. Cl.: B01D 71/00, C01B 33/107, B01D 61/14, B01D 63/10

(54) **Verfahren zur Gewinnung hochreiner Chlorsilanmischungen**
Method for extracting ultrapure chlorosilane mixtures
Procédé de production de mélanges de chlorosilanes très purs

(43) Veröffentlichungstag der Anmeldung: 17.08.2016
(73) Patentinhaber: Evonik Degussa GmbH, 45128 Essen (DE)
(72) Erfinder: MARINAS PÉREZ, Janaina, 79730 Murg (DE); RAULEDER, Hartwig, 79618 Rheinfelden (DE); BECHT, Simon, 61194 Niddatal-Assenheim (DE); UEHLENBRUCK, Goswin, 61440 Oberursel (DE)

(56) Entgegenhaltungen:
- EP-A1- 2 105 410
- WO-A1-2009/153090
- DE-A1-102008 054 537
- DATABASE WPI Week 201127 Thomson Scientific, London, GB; AN 2011-D26936 XP002741358, & JP 2011 063480 A (MITSUBISHI MATERIALS CORP) 31. März 2011 (2011-03-31)

## Beschreibung

### Technisches Gebiet

Die vorliegende Erfindung betrifft die Filtration von Chlorsilanmischungen mit dem Ziel der Gewinnung von an Fremdmetallen und Fremdmetallverbindungen abgereicherten Chlorsilanen.

### Hintergrund der Erfindung

Es ist bekannt, dass bei der Herstellung polykristallinen Siliciums, welches z. B. in der Photovoltaik oder bei der Glasfaser- oder Chipherstellung Verwendung findet, technisches Trichlorsilan (SiHCl₃, TCS) und/oder Siliciumtetrachlorid (SiCl₄, STC) als Rohmaterial eingesetzt wird. Diese Produkte werden im Stand der Technik zusammen mit anderen Silanen erhalten, beispielsweise im Gemisch mit Dichlorsilan (SiH₂Cl₂, DCS), Octachlortrisilan, Dekachlortetrasilan, Hexachlordisiloxan, Methyltrichlorsilan, Trimethylchlorsilan, Methyltrimethoxysilan, Methyltriethoxysilan, Hexamethyldisiloxan, Hexamethylcyclotrisiloxan, Octamethylcyclotetrasiloxan, Dekamethylcyclopentasiloxan, Dodekamethylcyclohexasiloxan, und darüber hinaus zusammen mit verschiedenen Verunreinigungen an Fremdmetallen und/oder deren Verbindungen. Solche Gemische werden im Rahmen der Erfindung mit *Chlorsilanmischungen* bezeichnet.

Ein Gehalt an Verunreinigungen durch Fremdmetalle, beispielsweise AI, B, Ca, Cr, Fe, Co, Cu, Mg, Mn, Ni, Ti, Zr, und/oder Zn, sowie deren Verbindungen, ist für die weitere Verwendung von TCS und STC in den oben genannten Anwendungsbereichen in der Regel schädlich. Solche Fremdmetalle und deren Verbindungen müssen daher entfernt oder auf einen tolerablen Gehalt reduziert werden. Zum Beispiel stehen Restmengen an BCl₃ im Chlorsilan als Einsatzstoff einer gezielten Dotierung des Reinstsiliziums im Weg. Typische Größenordnungen an solchen Verunreinigungen liegen bei 0,1 bis 5 Gew.-ppm, gelegentlich auch bis 10 Gew.-ppm oder höher.

In der Patentschrift US 8246925 B2 wird die Abtrennung von Fremdmetallen und Fremdmetallverbindungen vorgeschlagen, indem durch destillative Abtrennung eines Destillationsstroms in einem aufwändigen, mehrstufigen Rektifikationsverfahren zumindest ein Seitenstrom abgezweigt wird, der mit Fremdmetallen und/oder deren Verbindungen angereichert ist. Dieser abgezweigte Seitenstrom kann entsorgt oder einer sonstigen Verwendung zugeführt werden. Zwar werden durch die Abtrennung Fremdmetall abgereicherte Ströme aus STC, DCS und TCS gewonnen, die ohne gesonderte Aufarbeitung vielfältig einsetzbar sind. Doch müssen verbleibende, Fremdmetall enthaltende Seitenströme über Entsorgungssysteme, wie z. B. Wäsche und Hydrolyse, entsorgt werden.

In der Patentanmeldeschrift EP 2105410 A1 wird ein Verfahren zur Reinigung von Chlorsilanen vorgeschlagen, wobei die zu reinigenden gasförmigen Chlorsilane über eine aus PTFE bestehende Membran in einen Reaktor geleitet werden, in dem sich Natriumchloirid befindet.

DE 102008054537 A1 offenbart ein Verfahren zur Abtrennung von Fremdmetallen aus Siliciumverbindungen, die in einem ersten Schritt mit einem Absorptionsmittel in Kontakt gebracht und anschließend mittels einer Membran aus PTFE gereinigt werden.

In der japanischen Anmeldeschrift JP 20090216021 ist ein Reinigungsverfahren von Chlorsilanen mittels Filtration durch eine PTFE-Membran beschrieben. Aluminium-Verunreinigungen werden nachfolgend in einer Kontaktreaktion mit NaCl entfernt.

WO 2009/153090 A1 offenbart ein destillatives Verfahren zur Erzeugung höchstreiner Siliciumhalogenide mit einem reduzierten Gehalt an Fremdmetallen.

Es stellt sich daher die Aufgabe, Fremdmetall haltige Chlorsilanmischungen durch ein weiter vereinfachtes Verfahren so aufzuarbeiten, dass hochreine Chlorsilanfraktionen erhalten werden, wobei insbesondere entweder von Fremdmetall und/oder Fremdmetallverbindungen abgereichertes Dichlorsilan, Trichlorsilan und/oder Siliciumtetrachlorid oder auch abgereicherte Gemische von Dichlorsilan und Trichlorsilan erhalten werden können und wobei der Verlust insbesondere an Dichlorsilan und Trichlorsilan durch das Verfahren der Abtrennung der Verunreinigungen verringert ist.

### Beschreibung der Erfindung

Die gestellte Aufgabe wird durch ein Verfahren zur Gewinnung Fremdmetall abgereicherter Chlorsilane aus einer Chlorsilanmischung gelöst, die Fremdmetalle und/oder Fremdmetallverbindungen enthält, indem die Chlorsilanmischung durch zumindest eine Membran filtriert wird.

Gegenstand der Erfindung ist ein Verfahren zur Gewinnung Fremdmetall abgereicherter Chlorsilane aus einer Chlorsilanmischung, die Fremdmetalle und/oder Fremdmetallverbindungen enthält, durch Filtrieren der Chlorsilanmischung, wobei die Chlorsilanmischung durch zumindest eine Membran läuft, wobei das Material der Membran ausgewählt ist aus Polyamiden, Polyimiden, Polyamid-Polyimiden, Polyethylenterephthalat (PET) oder Polyphenylenoxid.

Das Verfahren hat neben dem gegenüber konventioneller Vorgehensweise sehr viel einfacheren Aufwand den vollkommen unerwarteten Vorteil, dass der Gehalt an Fremdmetallen und deren Verbindungen um eine bis anderthalb Größenordnungen oder mehr vermindert wird. Somit werden auf bisher unerreicht einfache Art und Weise Chlorsilanmischungen zugänglich, die zu Silizium für Anwendungen in der Elektronik, Photovoltaik und in der Technologie der Lichtwellenleiter weiter prozessiert werden können.

Das erfindungsgemäße Verfahren wird im Folgenden näher erläutert.

Es wird eine Membran eingesetzt, deren Material ausgewählt ist aus Polyamiden, Polyimiden, Polyamid-Polyimiden, Polyethylenterephthalat (PET) oder Polyphenylenoxid.

Vorteilhaft kann eine Hohlfasermembran eingesetzt werden, die für Siliziumverbindungen permeabel ist.

Weiterhin vorteilhaft kann als Membran Material Palladium eingesetzt werden. Besonders bevorzugt kann eine Metalllegierung aus Palladium und Silber eingesetzt werden.

Die Dicke der Membran kann im Bereich von 0,1 bis 1 µm, vorzugsweise von 0,3 bis 0,5 µm gewählt werden. Ganz besonders bevorzugt kann eine Membran mit einer Dicke von 0,45 µm eingesetzt werden.

Weiterhin kann eine Membran vorteilhaft sein, die einen mindestens zweischichtigen Aufbau mit zumindest einem der vorgenannten Materialien aufweist.

Vorzugsweise weist die Membran Poren einer definierten Größe auf, durch die die Chlorsilane diffundieren können, die Fremdmetalle oder deren Verbindungen jedoch nicht. Eine bevorzugt einsetzbare Membran kann beispielsweise eine Keramikmembran mit einem Schichtaufbau mit zumindest zwei mikroporösen Schichten aufweisen, die sich in der Größe ihrer Poren unterscheiden. Vorzugsweise kann eine der mikroporösen Schichten ein keramisches Material oder ein gesintertes Metall sein.

Aufgrund der hohen Reinheitsanforderungen in Bezug auf eine Verunreinigung mit fremdmetallischen Elementen oder deren Verbindungen wird bevorzugt eine höchstreine Membran im Verfahren eingesetzt. Diese Membran sollte eine Druckstabilität größer 1 barabs, vorzugsweise größer 2 barabs, besonders bevorzugt größer 3 bar_{abs} aufweisen.

Die Membran kann bevorzugt auf einem porösen Si-Träger oder Aluminiumoxid-Träger aufgebracht sein.

Des Weiteren kann es vorteilhaft sein, in dem erfindungsgemäßen Verfahren eine gerollte oder gestopfte Membran einzusetzen. Dies hat den Vorteil, dass die abzureichernde Chlorsilanmischung auf geringem Volumen eine große Fläche der Membran durchströmen kann. Somit kann die auf das Volumen bezogene Trennleistung des Permeats vom Filtrat maximiert werden.

Mit der Durchführung des erfindungsgemäßen Verfahrens werden auf bisher unerreicht einfache Art und Weise Chlorsilanmischungen zugänglich, die zu Silizium für Anwendungen in der Halbleiterelektronik, Photovoltaik und in der Technologie der Lichtwellenleiter weiter prozessiert werden können.

Mit dem erfindungsgemäßen Verfahren werden Fremdmetall abgereicherte Chlorsilane erhalten, enthaltend weniger als oder 80 µg/kg Fremdmetalle, ausgewählt aus Al, B, Ca, Cr, Fe, Co, Cu, Mg, Mn, Ni, Ti, Zr, und/oder Zn, und/oder Verbindungen mindestens eines dieser Fremdmetalle.

Die nach dem erfindungsgemäßen Verfahren erhaltenen Chlorsilane können zur Herstellung von Lichtwellenleitern, Mantelmaterial für Lichtwellenleiter, Materialien für die Photovoltaik, Halbleiter für elektronische Anwendungen verwendet werden.

Die Erfindung wird im Folgenden anhand eines Beispiels näher erläutert.

### Beispiel 1

Tetrachlorsilan (STC) mit einem Gehalt an Fremdmetallen, der in der linken Spalte von Tabelle 1 angegeben ist, wurde in einer Filtrations-Apparatur unter Stickstoff-Atmosphäre durch eine 0,45 µm dicke PET Membran gedrückt.

Die Filtration erfolgte aus einer Flasche mit 20 ml-Spritze und der vorgenannten Membran als Filteraufsatz. Das filtrierte Produkt wurde in eine 100 ml Schottflasche gegeben, die zuvor mit VE-Wasser und hochreinem Aceton gereinigt und abschließend mit Stickstoff getrocknet worden war. Das Filtrat enthielt die in der rechten Spalte der Tabelle 1 aufgeführten Verunreinigungen an Fremdmetallen.

Die Verunreinigungen wurden mittels GC gemessen.

**Tabelle 1.**

| | ***STC Eingang*** | ***STC filtriert*** | |
|---|---|---|---|
| *Aluminium* | *380* | *13* | *µg*/*kg* |
| *Bor* | *170* | *40* | *µg*/*kg* |
| *Calcium* | *23* | *4* | *µg*/*kg* |
| *Chrom* | *5* | <*1* | *µg*/*kg* |
| *Eisen* | *120* | *5* | *µg*/*kg* |
| *Kobalt* | <*1* | <*1* | *µg*/*kg* |
| *Kupfer* | *2* | <*1* | *µg*/*kg* |
| *Magnesium* | *2* | <*1* | *µg*/*kg* |
| *Mangan* | *11* | <*1* | *µg*/*kg* |
| *Nickel* | *2* | <*1* | *µg*/*kg* |
| *Titan* | *27* | *2* | *µg*/*kg* |
| *Zink* | *16* | *1* | *µg*/*kg* |
| *Zirkon* | *190* | *2* | *µg*/*kg* |

## Patentansprüche

1. Verfahren zur Gewinnung Fremdmetall abgereicherter Chlorsilane aus einer Chlorsilanmischung, die Fremdmetalle und/oder Fremdmetallverbindungen enthält, durch Filtrieren der Chlorsilanmischung, wobei die Chlorsilanmischung durch zumindest eine Membran läuft, wobei
das Material der Membran ausgewählt ist aus Polyamiden, Polyimiden, Polyamid-Polyimiden, Polyethylenterephthalat (PET) oder Polyphenylenoxid.

2. Verfahren gemäß Anspruch 1, wobei die Membran gerollt oder gestopft eingesetzt wird.

## Claims

1. Process for deriving foreign-metal-depleted chlorosilanes from a chlorosilane mixture containing foreign metals and/or foreign metal compounds by filtering the chlorosilane mixture, wherein the chlorosilane mixture traverses at least one membrane, wherein
the material of the membrane is selected from polyamides, polyimides, polyamide-polyimides, polyethylene terephthalate (PET) or polyphenylene oxide.

2. Process according to Claim 1, wherein the membrane is employed in a rolled or stuffed state.

## Revendications

1. Procédé pour l'obtention de chlorosilanes appauvris en métaux étrangers à partir d'un mélange de chlorosilanes contenant des métaux étrangers et/ou des composés de métaux étrangers, par filtration du mélange de chlorosilanes, le mélange de chlorosilanes passant à travers au moins une membrane,
le matériau de la membrane étant choisi parmi des polyamides, des polyimides, des polyamides-polyimides, du polyéthylène téréphtalate (PET) ou de l'oxyde de polyphénylène.

2. Procédé selon la revendication 1, dans lequel la membrane est utilisée sous forme roulée ou fourrée.
